# EUROPEAN PATENT SPECIFICATION

(11) **EP 0 923 317 B1**
(45) Date of publication and mention of the grant of the patent: **09.03.2005**
(21) Application number: 97929611.8
(22) Date of filing: 25.06.1997
(51) Int. Cl.: A23L 2/52, A61K 31/00

(54) **ENERGY DRINK**
ENERGIEGETRÄNK
BOISSON ENERGETIQUE

(30) Priority: 27.06.1996 NO 962728
(43) Date of publication of application: 23.06.1999
(73) Proprietor: Gordeladze, Jan Oxholm, 1344 Haslum (NO)
(72) Inventor: Gordeladze, Jan Oxholm, 1344 Haslum (NO)
(74) Representative: Gaunt, Robert John
(86) International application number: PCT/NO1997/000164
(87) International publication number: WO 1997/049304

(56) References cited:
- EP-A- 0 537 113
- EP-A- 0 540 462
- EP-A- 0 659 349
- AFTENPOSTEN, August 1995, HERBJORNSRUD DAG, "Venter Seg Mye av ny Sportsdrikk".
- DIALOG INFORMATION SERVICE, File 5, Biosis, Dialog Accession No. 5968855, Biosis Accession No. 84101420, ROCHAT M.H. et al., "Modelling of Dynamic Behaviour for Total Parenteral Nutrition"; & INTERNATIONAL JOURNAL OF PHARMACEUTICS, 38(1-3), 1997, 79-82.
- JOURNAL OF APPLIED PHYSIOLOGY, Volume 80, No. 6, June 1996, VAN ZYL C.G. et al., "Effect of Medium-Chain Triglyceride Ingestion on Fuel Metabolism and Cycling Performance", pages 2217-2225.
- PATENT ABSTRACTS OF JAPAN, Vol. 96, No. 9; & JP,A,08 120 187 (LION CORP.), 14-05-96.
- PATENT ABSTRACTS OF JAPAN, Vol. 9, No. 78, C-274; & JP,A,59 210 870 (TAIYOU KAGAKU K.K.), 29 November 1984.
- PATENT ABSTRACTS OF JAPAN, Vol. 9, No. 78, C-274; & JP,A,59 210 871 (AJINOMOTO K.K.), 29 November 1984.

## Description

### 1. Introduction

In general, sports or energy drinks are designed to ensure sufficient supplies of energy and mineral ions to the working muscle, thereby ensuring an optimalization of sugar, fatty acid and amino acid consumption. Furthermore, the energy replenishment should be aiming at the prevention of hypoglycaemia, which impairs the function of the nervous system.

Hence, in general, these sports drinks contain mono- and polymeric sugars and salts (of which Na- and K-salts are properly balanced). Recently patented and/or marketed sports drinks are designed to also enhance hepatic gluconeogenesis by making available to the liver substrates like glycerol, or the amino acids alanine or glutamine. Since the muscular tissue during sustained energy expenditure needs access to fatty acids, some researchers have attempted to raise the supplies of free fatty acids by adding medium chain triglycerides (hereafter MCT; and which are also given to patients with malabsorption and as parenteral energy supplies to critically ill, hospitalized patients).

In Journal of Applied Physiology, Volume 80, No. 6, June 1996 (Van Zyl C.G. et al), "Effect of Medium - Chain Triglyceride Ingestion on Fuel Metabolism and Cycling Performance", pages 2217 - 2225 there are disclosed compositions for sports or energy drinks suitable for persons involved in endurance exercise, physical activity or suffering from overtraining and which comprise carbohydrates and electrolytes, glycerol esterified with a C₁₂ fatty acid and amino acids. The article indicates that ingestion of a relatively large amount of MCT in addition to a standard carbohydrate regime enhances endurance performance.

JP-A-59/210870 discloses a sports or energy drink composition which contains MCT added to a natural fat oil with vitamin E and sucrose isobutylacetate. EP-A-0659349 relates to the treatment of diabetes by the administration of a composition containing myo-inositol. The intention is to lower the glucose levels in the blood of diabetics, whereas the purpose of a sports or energy drink is to increase the blood glucose levels of individuals undertaking exercise.

However, no sports or energy drink with a balanced composition aiming at maximal muscular fatty acid catabolism, reduced lactic acid production, reduced muscular protein catabolism and blockade of central nervous fatigue while utilized during endurance exercise, has hitherto been developed. The present sports drink aims at encompassing all of the above mentioned aspects.

According to the present invention there is provided a composition suitable for rapid and prolonged muscular and cerebral energy metabolism comprising physiologically absorbable electrolytes, carbohydrates, amino acids with branched side chains and lipids, wherein the lipids comprise L-carnitine and glycerol esterified with a medium chain saturated fatty acid selected from caprylic (C₈) acid and/or capric (C₁₀) acid and/or a C₁₂ fatty acid, and/or a long chain mono- or polyunsaturated fatty acid, and wherein the carbohydrate comprises at least three sugars selected from glucose, fructose and maltodextrins, as defined by the claims. There is also provided an energy supplement, such as a sports or energy drink, which comprises such a composition.

### 2. Biochemical and physiological background

### 2.1. Metabolism in the contracting muscle

Depending on the caloric demand, the metabolic rate of a myocyte can be increased some 200 times, compared to the resting level. This occurs in spite of a small number of metabolic pathways within the cell. In general, these major pathways comprise: 1) complete oxidation of carbohydrates, fat and proteins (i.e. amino acids) in the muscle; 2) net transformation of carbohydrates to storage fat, and of proteins to carbohydrates (gluconeognesis) and fat; 3) net production of keto acids (aceto-acetic acid and β-hydroxy butyric acid (only in liver); and 4) net degradation of carbohydrates (glycogenolysis, anaerobic glycolysis).

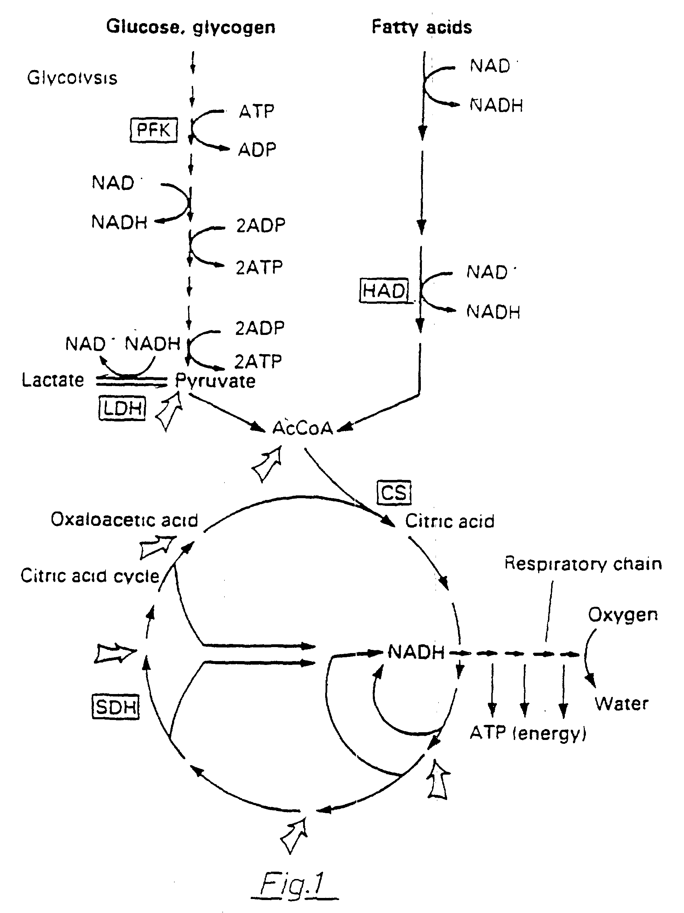

The cell utilizes four important metabolic pathways to catabolize and extract energy from fat and carbohydrates (see figure 1). These are the glycolysis, the β-oxidation, the citric acid cycle, and the oxidative phosphorylation.

Figure 1 shows the major metabolic pathways ensuring energy production in the myocyte. In the figure each small arrow depicts a chemical (enzymatic) reaction. Enzymes, being mandatory to, and applied as measures of metabolic capacity, are the following: PFK = phosphofructokinase, LDH = lactate dehydrogenase, HAD = 3-hydroxyacyl-CoA-dehydrogenase, CS = citrate synthetase, SDH = succinate dehydrogenase. The large arrows indicate entrance points for amino acids, which serve as substrates in a given metabolic pathway.

ATP, which is the energy rich compound utilized by the myocyte, can be synthesized in many ways, depending on pertinent demands for muscle force generation. In table 1, some "activities" and estimated energy demands and energy availability to the contracting muscle are summarized.

**Table I:**

| Activity | Energy demand | | Availability | |
|---|---|---|---|---|
| | A) Velocity | B) Amount | Type | Amount |
| 100 m dash | 2.6 | 0.43 | ATP+PCr | 0.50 |
| 400 m | 2.3 | 1.72 | ATP+PCr | 0.50 |
| 800 m | 2.0 | 3.43 | Glycolysis | 1.50 |
| 1500 m | 1.7 | 6.00 | Glucose oxid | 85.0 |
| Marathon | 1.0 | 150.0 | Fatty acid oxid | 4000 |
| Rest | 0.0 | 0.36 | ----- | --- |
| A) energy rich phosphate; mol/min | | | | |
| B) energy rich phosphate; mol/70 kg energy rich phosphate equals the sum of ATP and PCr (creatine phosphate) Glucose oxid = glycolysis and oxidation in the citric acid cycle Fatty acid oxid = β-oxidation and oxidation in the citric acid cycle | | | | |

During a limited engagement, the muscles can thrive on its own storage of ATP and creatine phosphate (which re-synthesises ATP from ADP) without de novo production of ATP. During prolonged muscle activity, the expenditure of substrates is gradually shifted towards glycolysis and fatty acid oxidation, which both yield acetyl-CoA, forcing the citric acid cycle to produce reduced flavine and adenine nucleotides driving the oxidative phosphorylation in the presence of oxygen (O₂). If a sudden enhancement of energy production is required, ATP is generated from anaerobic glycolysis with concomitant production of lactic acid, because the O₂ available is not sufficient to increase ATP-synthesis by oxidative phosphorylation alone.

### 2.2 Cellular metabolism and physical endurance

The most prominent adaptive changes within a muscle fibre constantly subjected to endurance exercise comprise: 1) activation of metabolic enzymes, 2) altered sensitivity to hormones, 3) a change in the profile of contractile elements (filaments) and 4) optimalization of membrane-bound transport mechanisms. In this chapter, emphasis will be put on issue 1).

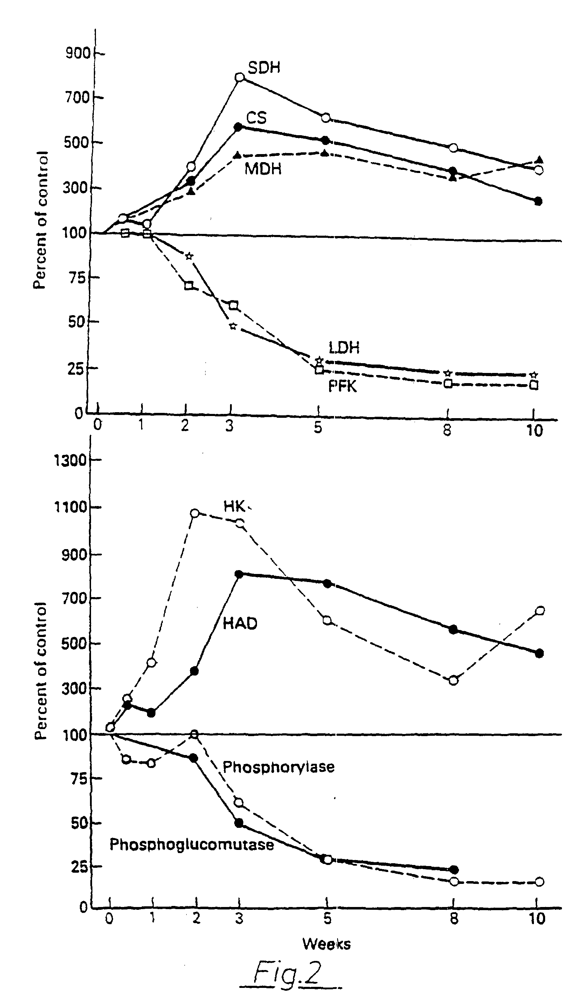

A muscle, which is stimulated chronically by electrical pulses for 2-3 weeks to perform over a prolonged period of time, demonstrates the following adaptive changes: a) increased activity of the enzymes SDH, CS, HK and HAD and b) a reduction in the enzymes LDH, PFK, phosphorylase and phosphoglucomutase (see figures 2A and 2B). The first three enzymes are contained within the citric acid cycle, and will increase the production of NADH, thus increasing the flow through the constituents of oxidative phosphorylation chain to give more ATP. HAD enhances the breakdown of fat through β-oxidation of free fatty acids (FFA), while PFK, phosphorylase and phosphoglucomutase all belong to the glycolytic pathway. A reduction of these enzymes indicate that the augmented oxidative capacity in the muscle makes ATP-production vi glycolytic degradation of glucose almost superfluous. Also creatine kinase (CK) is down regulated, which indicates that the apparatus meant to sustain ATP-levels during maximal anaerobic exercise (e.g. 100 m dash) is of lesser importance.

Figure 2 shows the changes (% of control) in enzyme activities induced by chronic electric stimulation of rabbit hind limb muscle (10 Hz, over 24 hours, for 3 days to 10 weeks). Abbreviations are: SDH = succinate dehydrogenase, CS = citrate syntetase, MDH = malate dehydrogenase, LDH = lactate dehydrogenase, PFK = 6-phospho froctokinase, HK = hexokinase, HAD, = 3-hydroxyl CoA-dehydrogenase.

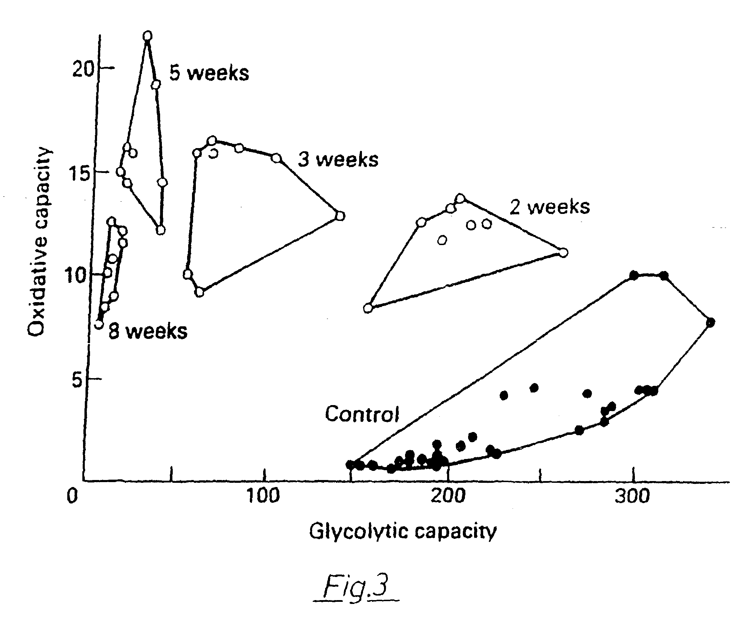

The relationship between glycolytic and oxidative capacity is a function of exercise load, and is illustrated in figure 3. In figure 3 there is shown changes in the enzymatic activity in the hind thigh muscle from a rabbitt after electro-stimulation. The filled-in circles represent citrate synthetase and the open circles represent fructose bisphosphatase as in similarity with figure 2. The glycolytic and the oxidative capacity is measured with fructose bisphosphatase and citrate synthetase, respectively.

Past a certain time of exercise, the total oxidative capacity is diminished towards normal level, and the subsequent result is a decimated glycolytic capacity. This is one important aspect of overtraining, which will be described exhaustively in chapter 3.

In the muscle, there are several types of fibres with different glycolytic and oxidative capacities (type I = slow, oxidative; type IIA = rapid, oxidative; type IIB = rapid, glycolytic). Consequently, by practising different exercise modes and intensities (i.e. continuous or intermittent loads), it is feasible to enhance both oxidative and glycolytic capacities. The amount of fibre type I is mainly genetically determined, however, endurance exercise may convert type IIB into type IIA. Hence, custom designed training programs might direct the appropriate change in metabolic capacity best suited for the kind of activity in question. Noteworthy is the fact that interval training (intermittent anaerobic adaptation) increases the muscular level of creatine phosphate (PCr) and the activity of the enzyme creatine kinase (CK), thus minimizing the time by which ATP is resynthesised from ADP.

The mechanisms behind this adaptation of metabolizing enzymes are many. Some of which entail claimed causative relations to reduced ATP, increased ammonia (NH₄⁺) from AMP degradation, reduced O₂ tension, enhanced sympathomimetic stimulation of nerve cells, or augmented protein kinase C (PKC) activation through the release of intracellular Ca²⁺ in the contracting muscle. The latter theory may account for the possible hormonal (and thereby pharmacological = doping?) intervention of exercise induced adaptation. In spite of the fact that the muscle might be rendered maximally oxidative by prolonged exercise, it needs supplies of carbohydrates while working, to ensure the capacity for intermittent high efficiency output ("spurts"). The expenditure of sugar by the myocyte depends on 1) the delivery rate of glucose from the blood (synthesized in the liver, gluconeogenesis) 2) the glucose transport rate and 3) the rate of glycogenolysis.

Liver glucose is stimulated by a high glucagon/insulin ratio and cortiscl. Thereby, blood glucose is maintained , even though HK (hexokinase) in the muscle "steals" or extracts glucose from the blood stream. The muscle contraction, i.e. the increase of cytosolic Ca²⁺, stimulates translocation of the glucose transporter GLUT-4, which yields and increased transport rate of glucose into the myocyte. Furthermore, insulin and physical exercise in the long run enhance the plasma membrane levels of GLUT-4.

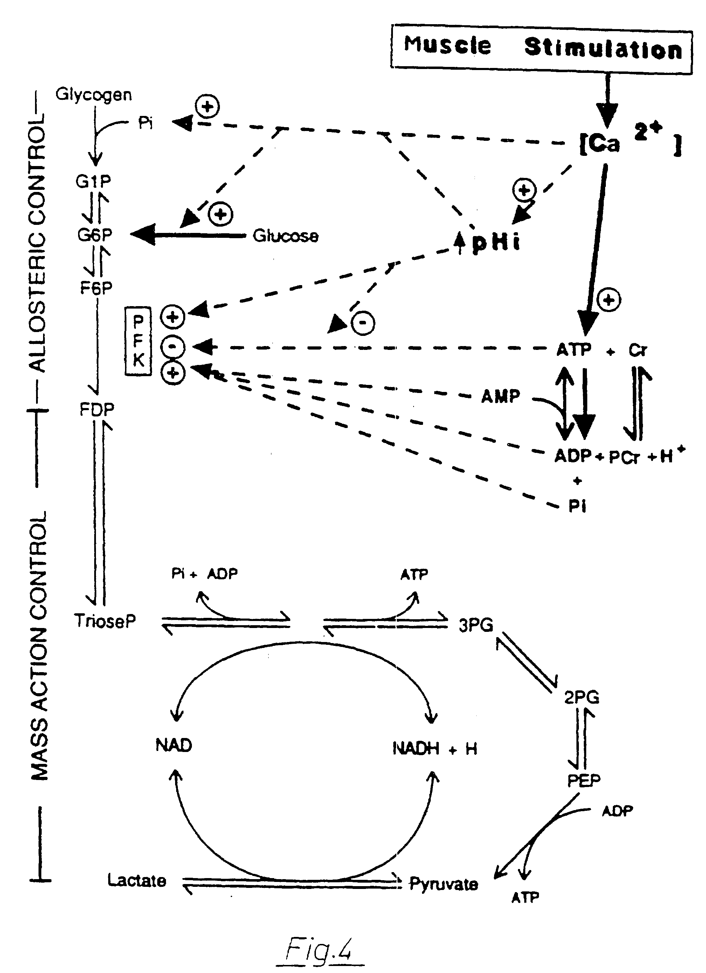

The catabolism of muscle glycogen depends on the activation of glycogen phosphorylase by phosphorylase kinase. The latter is stimulated by Ca²⁺ (in the working muscle), cAMP (a hormone = adrenaline; glucagon - induced second messenger), and low pH (acidified muscle due to the accumulation of lactic acid). Nevertheless, PFK (phosphofructokinase) is regarded the rate limiting factor and coordinator of muscular glucose expenditure (see figure 4).

Figure 4 shows the regulation of glycogenolysis and glycolysis in the myocyte. PFK (phosphofructokinase) regulates the production of triose phosphates and pyruvate (the entrance to the Krebs cycle = citric acid cycle). Notations: + = stimulation, - = inhibition.

Even if PFK is reduced by prolonged exercise, the enzyme will still be able to deliver substrate (F1,6DP) to the glycolytic pathway when necessary, due to a low cellular level of ATP and citrate. Furthermore, PFK can be inhibited by the accumulation of protons in the myocyte (vis lactic acid production), or be stimulated by NH₄⁺- production from amino acid catabolism in the muscle cell. Finally, it should also be mentioned that cAMP (i.e. glucagon- or adrenaline-stimulation) inhibits PFK.

The importance of fatty acid oxidation for prolonged muscular activity is already described in connection with adaptation phenomena, yielding enhanced oxidative enzyme capacity. Nevertheless, mobilization of free fatty acids (FFA) is slow. Physical exercise lowers the re-esterification of FFA to glycerol in adipose tissue. Furthermore, the level of lipoprotein lipase = LPL and hormone sensitive lipase = HSL governed by stress hormone/insulin ratio (i.e. the net effect of cAMP) stimulate net hydrolysis of triglycerides, and thereby enhance the blood levels of FFA (maximally 2-3 times increase). In spite of augmented FFA availability, the uptake of FFA is not altered much. By adaptation and an enhanced access of long-chain FFA, the myocyte may maximally retrieve 2/3 of its total energy from β-oxidation. The pre-existence of large glycogen depots and intermittent intake of sugars are therefore important. However, the myocyte has an intrinsic ability to spare glycogen, since β-oxidation yields large levels of acetyl-CoA, which will inhibit pyruvate dehydrogenase and PFK.

### 2.3 Physiological aspects of endurance exercise

Adaptation of the muscle cell to face enhanced working capacity also demands adjustment of other organ systems for optimal energy utilization. Some of these phenomena are outlined underneath.

### 2.3.1. Short term exercise

### The cardiovascular system

Heart rate (HR) and stroke volume (SV) increase to yield a minute volume (Q = HR x SV) enhancement ranging from 5 l/min to 40 l/min. Furthermore, the arterio-venous oxygen difference (a-v O₂) increases from 5 ml/dl to 15 ml/dl due to enhanced oxygen consumption. The blood stream is diverted towards the working muscles due to sympatho-adrenergically relaxed arterioles in the muscle tissue, while arterioles in other tissues, e.g. internal organs, are constricted. The blood volume is slightly diminished due to increased transpiration and enhanced hydrostatic pressure, The body temperature is slightly increased, while blood pH is lowered due to the Cory cycle (production of lactate in the muscle and transport to the liver via the circulation), or to the production of ketone bodies. Consequently, the release of O₂ from haemoglobin is facilitated peripherally (The Bohr effect = saturation curve shift).

### Respiratory response

The amount of air (V_{E}) exchanged by the lungs increase markedly from 5 l/min to 140 l/min. V_{E} depends on the vital capacity (VC), and is not a proper index for the monitoring of fitness.

### Metabolic response

The oxygen uptake (V_{O2}) is enhanced fro approximately 3.5 ml/kg/min to as high as 90 ml/kg/min.

### 2.3.2 Endurance exercise

### Adaptation within the muscle cell

There is an increased mobilisation of motoric units due to a natural resistance in complementary muscle groups. This phenomenon confers a higher precision or co-ordination of nervous firing activity, and thereby enhanced muscular force. Hypertrophy of the muscle tissue, i.e. and enhanced levels of actin and myosin (contractile proteins), and a strengthening of ambient connective tissue will start developing over time. It has also been asserted that hyperplasia (increased number of muscle cells) will eventually take place subsequent to prolonged physical activity.

### The cardiovascular system

The heart rate (HR) at rest is often chronically low (30-40 beats/min) , which can be ascribed to a reduction in sympathetic activity of the autonomous nervous system, and/or a lower frequency of the pace-maker signal of the sinoidal node. The stroke volume (SV) is chronically elevated, which is due to a partial hypertrophic of the heart muscle (predominantly the ventricles) or also enhanced Ca²⁺ - fluxes and Ca²⁺-myosin ATPase activity. The minute volume (Q) is markedly enhanced, however, mainly because of an increase in the stroke volum (SV). Furthermore, there is ample angiogenesis, i.e. an increase in the amount of muscular capillaries can be observed.. The blood pressure (BP; systole as well as diastole) is moderately lowered.

### Respiratory response

The arterio-venous oxygen difference (a-v O₂) is somewhat increased, however, it is assumed to be linked to an increase in the number of mitochondria in the myocyte. The pulmonary blood flow is enhanced, but only a minor enhancement of gas volume exchanged (V_{E}), vital capacity (VC) or tidal volume can be observed. However, the respiration frequency is markedly reduced. The uptake of oxygen (V_{O2}) is dramatically enhanced, however, this phenomenon is mainly due to the increased blood flow through the muscular tissue.

### 2.4. Immunological aspects of endurance training

Subsequent to an acute enhancement in work load or to intermittent physical activity, one may observe the following alterations in the blood related to adaptations in the function of the immune system.:
Increase in leukocyte number (all types)
Marked raise in the number of neutrophils
Increase in the number of "killer" (NK) cell
Substantial increase in monocyte number
B-cells are not significantly affected
The number of T-cells (only "helper" cells) is moderately reduced

When physical activity ceases, the production of interleukin 1 (IL-1) and interleukin 6 (IL-6) is augmented. IL-6 is considered to be involved in the development of osteopenia (reduced bone mass), which can lead to osteoporosis (bone brittleness) via stimulation of the bone resorbing osteoclasts in the bone matrix.

In general, it may be asserted that physical exercise stimulates our immune system against bacteria, as well as virus and cancer (through the increase in NK cells). Nevertheless, prolonged exercise, which borders on overtraining, may result in the opposite. The amount of leukocytes in the blood is reduced, and the immune defence system is weakened. The levels of immunoglobins belonging to type IgA, IgG and IgM are lowered, and the athletes more easily catch generalized virus infections, upper respiratory tract infections, mononucleosis, gastroenteritis and meningitis.

### 2.5 Endocrine factors and endurance exercise

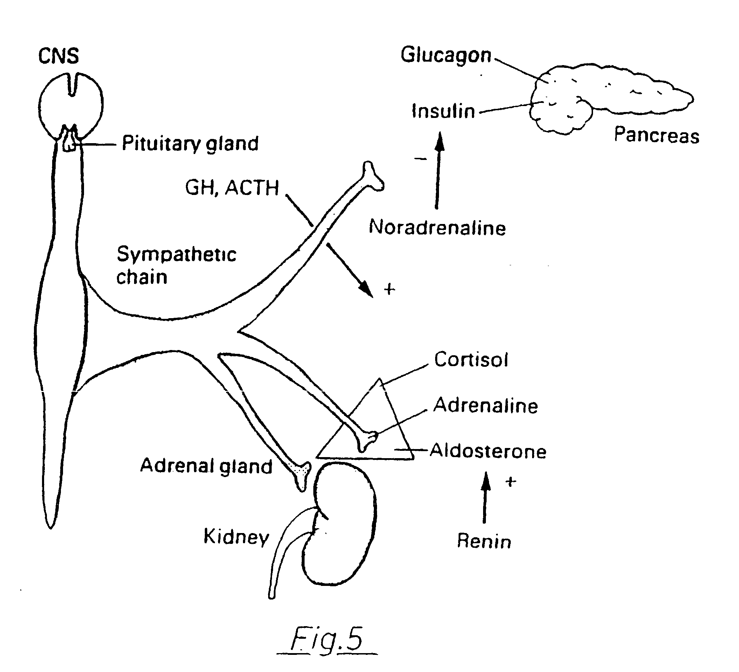

Endurance exercise does affect the endocrine system, both acutely and in a chronic fashion. The immediate responses may be summarized in figure 5.

Figure 5 shows a simplified model of the autonomic endocrine system. ACTH = adenocorticotropic hormone, CNS = central nervous system, GH = growth hormone.

The glucagon/insulin ratio determines the cellular glucose uptake and gluconeogenesis in the liver. Furthermore, insulin is capable of enhancing the transport of amino acids into the cells and counteract lipolysis in adipose tissue. Adrenaline is an insulin antagonist and stimulates specifically lipolysis, thereby mobilising free fatty acids ((FFA) to the circulation. Adrenocorticotropic hormone (ACTH) from the pituitary augments cortisol production and release from the adrenals, thus enhancing the latent hepatic gluconeogenetic potential. Earlier in this chapter, it is discussed how cAMP-generating hormones enhance the rate of glycogenolysis, and how insulin obliterates this effect. Growth hormone (GH) is liberated from the pituitary (facilitated by blood amino acids and blocked by high glucose) and exerts an insulin-like effect, i.e. it stimulates the uptake of amino,acids into cells, augments protein synthesis and cellular growth. GH also displays an anti-insulin like action, i.e. GH enhances both lipolysis and elevates blood sugar.

Finally, the hormonal response to loss of body fluids (e.g. sweating) should be mentioned briefly. Renine from the renal juxta glomerular bodies stimulates the activity of the angiotensin system yielding the vasoactive substance angiotensin II (A-II), which facilitates the synthesis and liberation of aldosterone from the adrenals, thereby increasing the reuptake of Na⁺ from the urine to the circulation, and reducing the volume of secondary urine (diuresis). Furthermore, antidiuretic hormone (ADH = vasopressin) from the posterior pituitary lobe) will stimulate the water permeability of tubular cells, thus facilitating water fluxes from the luminal space in the nephrons, and diminish fluid loss from the body. This is one of the mechanisms utilized by the body to maintain blood pressure during heavy exercise in high ambient temperature.

### Adaptation due to exercise

This is mainly observed as the development of a "sports" medulla, which indicates an increased release of adrenaline from the adrenals via the autonomic nervous system to stimuli like hypoglycaemia, hypoxia, hypercapnia or directly via the action of glucagon. Besides, the adapted adrenals have increased in size, and render the well trained athlete's insulin-response to glucose and arginine (and other amino acids) less prominent.

Other pituitary hormones, like luteinizing hormone (LH) and follicle stimulating hormone (FSH) should also be mentioned, since they play a major role in the production of sex steroids (sex hormones), and thereby affect the onset puberty and body growth in the early years thereafter.

Intensive physical exercise is associated with a minor reduction in blood volume, and a moderately reduced concentration of sex steroids may lead to a pseudo-normal condition. Long term endurance exercise will inevitably lead to chronically reduced concentrations of LH, FSH and sex steroids. This condition is designated hypothalamic hypogonadism, and may provoke irregular menstruation in women or reduced spermatogenesis in men. If such a condition is precipitated in prepubertal athletes, it may delay the onset of the menarche, and will be directly counterproductive for training of certain physical skills. Obliteration or loss of pituitary production of gonadotropins may be caused by an overproduction of endogenous opoid peptides (EOP), e.g. endorphins which will increase their pain threshold, but inhibit the egress of hypothalamic releasing factors, i.e. hormones which normally would stimulate the synthesis and release of LH and FSH from the pituitary.

### 3. Overtraining

Overtraining is due to an imbalance between exercise and restitution, and is defined as a non-expected or non-planned reduction in the ability to perform in the absence of an overt organic ailment or disease, and in spite of a normal or increased training effort or exercise level. Acute overtraining, i.e. a period consisting of a few days until a couple of weeks, is deliberately utilized to attain peak performance subsequent to a few days of rest (= super-compensation). Chronic overtraining, however, entails a condition where complete recovery or restitution is absent, and where the ability to perform has been reduced, even after several days of rest. At present, there is no simple specific or sensitive diagnostic test applicable to reveal overtraining in an early stage. The diagnosis is based on exclusion of other organic disease. The symptoms of overtraining can be listed as shown in table 2, and consist of so-called sympathetic or parasympathetic symptom groups:
- Increased early morning heart rate
- Slow normalization of heart (especially rest) frequency subsequent to physical exercise
- Postural (orthostatic) hypotension
- Increased blood pressure during rest
- Slow normalization of resting blood pressure subsequent to physical exercise
- A reduction in haematocrit (HCT)
- Reduced working capacity (enhanced fatigue)
- Amenorrhoea (cessation of menstruation)
- Reduced V_{O2} (blood oxygen saturation)
- Weight loss
- Increased tendency to contract infections
- Sluggish would healing rate
- Loss of libido (sexual desire)
- Loss of appetite
- Sleep disorders
- Depressive behavioural patterns
- Loss of initiative and enthusiasm
- Increased nocturnal fluid intake
- Muscle- and joint pain (heaviness of legs)
- Increased serum creatine kinase activity

### Table II. Some signs and symptoms of overtraining

Acute overtraining (which is a rare condition) occurs with sprinters, jumpers and throwers (anaerobic training), and usually results in weight loss, sleep disorders, accelerated resting pulse and delays in regaining normal capacity (which resembles hypothyroidism). Chronic overtraining occurs with cyclists and long distance runners (aerobic training), and entails predominantly bradycardia with rapidly regained normal capacity (resembles adrenal hypofunctioning).

### 3.2. Metabolic and other disturbances following overtraining

Some common metabolic changes associated with overtraining are loss of PCr (creatine phosphate), lactate accumulation in muscle tissue (i.e. proton-induced destruction of enzymes within the different metabolic pathways eventually generating ATP), loss of muscle glycogen, depletion of blood glucose, and an increased ratio of tryptophan to amino acids with branched side chains.

Why is it that the myocyte cannot utilize solely free fatty acids (FFA) for energy production?. A marathon runner's muscle mass can, from F FA, generate only some 50% of the energy required to obtain a decent result (average = 2.15 hours). FFA are bound to plasma proteins and transported into the cells' mitochondria using the carnithine shuttle mechanism. This phenomenon represents an intrinsic upper limit for the extraction of energy from fat. Consequently, the overtraining syndrome is associated with loss of other energy forms like PCr and muscle glycogen, and with a reduction in blood glucose.

Hypoglycaemia contributes to what is termed central fatigue, i.e. the central nervous system demands a reduction of the total body energy expenditure, and strives to overrun the autonomic nervous system. Usually, the muscle will metabolize sugars and fat, if ample amounts of these sources are present. However, the muscular energy expenditure may be covered by amino acids (up to 20%), and preferably the amino acids with branched side chains like leucine, isoleucine and valine. Especially leucine may be metabolized to alanine, glutamine and aspartic acid to become substrates for gluconeocenesis in the liver, but may also be directly converted, by transamination, to acetyl-CoA for further oxidation in the citric acid cycle in the myocyte itself. Nevertheless, NH₃ may accumulate in blood, because the liver is not capable of detoxifying the molecule by funnelling it through the urea (ornithine-citrulline) cycle. Hence, NH₃ may be entering the brain, leading to neurological symptoms like loss of coordination, ataxia and cramps/coma as an inevitable result.

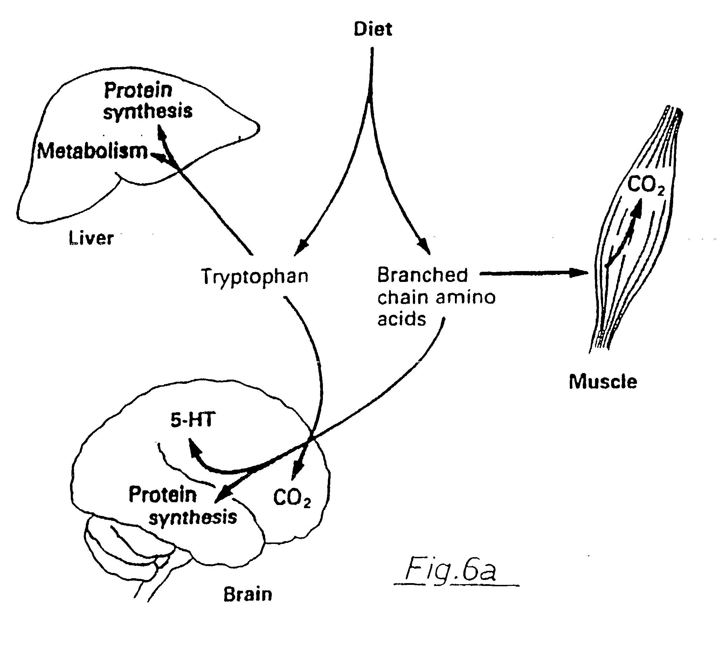

However, there are other symptoms also related to the amino acid metabolism, occurring in conjunction with overtraining,. The branched amino acids, which are utilized during muscular exercise, are transported into the CNS by the same carrier mechanism used by tryptophan. An increased CNS contents of tryptophan is therefore a direct consequence of strenuous physical exercise. Tryptophan is converted to the neurotransmitter serotonin (5-HT), which may accumulate in the CNS leading to an increased sensation of fatigue and a craving for sleep. Enhanced contents of NH₃ in the blood may, by itself, lead to an increased uptake of tryptophan into the CNS (see figures 6A and 6B).

Figure 6a shows the relationship between the metabolism of amino acids containing branched side chain and tryptophan in muscle, liver and brain.

Figure 6b shows a schematic representation of peripheral and central fatigue. Notice particularly a) loss of glycogen, ATP and PCr (creatine phosphate) in muscle and b) accumulation of 5-H'T in the CNS.

The production of 5-HT in conjunction with overtraining may explain several central nervous effects like drowsiness, mood oscillations, fatigue and reduced secretion of hypothalamic releasing factors like GnRH (gonadotrophin releasing hormone), which is responsible for the synthesis and release of LH and FSH from the pituitary. 5-HT is also affecting adrenergic nerve transmission in the CNS, and may lead to serious neuroendocrine related overtraining problems like hypogonadism in adult athletes, or delayed onset of puberty in juvenile athletes.

### 4. Overtraining in younger athletes.

Older children (14-18 years of age) display tendencies towards a biochemical adaptation in the muscle tissue, as well as increased oxygen uptake, which resemble the phenomena observed with fully grown athletes. For young male athletes, it is mandatory that they exhibit a normal, age-matched level of testosterone, However, it is not possible to utilize testosterone measurements for prepubertal male athletes to prevent or predict overtraining. Consequently, one has to resort to other variables like diurnal variation of cortisol or growth hormone, sleep disturbances, or measurements of heart rate = HR (which is increased). If marked alterations of these parameters are manifest, overtraining has already precipitated. This is considered to totally unacceptable with young athletes.

But, is if feasible to prevent overtraining in these individuals? If the 5-HT concept is applied as a theory for overtraining, the following deliberation is valid: These boys display low testosterone levels in the circulation. Hence, they have low muscle mass, which cannot store large amounts of glycogen. Most probably, their capacity of handling NH₃ in the ornithine-citrulline cycle is reduced, and they may mobilize less FFA due to lesser storage fat than an adult. Consequently, they will experience glycogen depletion, low blood sugar, and NH₃-intoxication much earlier during physical exercise, than an adult. These young boys also exhibit lower circulating levels of amino acids (AA) in the blood than adults due to their relatively higher amounts of growth hormone released from the pituitary. It is therefore more important for young athletes to replenish their glucose pools on a regular basis during exercise, and ingest proteins rich in branched amino acids (preferably as a hydrolysate) just before finishing their training. Only in this manner, it is then feasible to hamper the uptake of 5-HT to the CNS, thereby preventing a subchronic interference with their natural bodily processes leading to puberty.

### 5. Rationale for the development of improved energy drinks

Conventional energy drinks have focussed on impeding the loss of fluid to ensure optimal blood pressure, inhibiting the development of mitochondrial oedema and myocyte destruction, or restoring the blood sugar to prevent the depletion of blood glucose, which otherwise would decimate glucose metabolism in the central nervous system. Furthermore, it has been attempted to add substrates like glycerol to furnish substrates for the hepatic gluconeogenesis.

However, to date, it has not been focussed on the coupling between glycogenolysis and β-oxidation of fatty acids in the muscle, i.e. no one has tried to enhance the level of acetyl-CoA via β-oxidation of fatty acids to the extent that glycolysis, and hence, glycogenolysis is obliterated or minimized. It is known that the uptake of free fatty acids (FFA) to the mitochondria is proportional to the FFA blood concentrations, and that the transport of FFA into the mitochondria is dependent on the carnitine-shuttle mechanism. But, this transport mechanism is restricted to long chain fatty acids. Fruit and nut oils contain a larger portion of saturated, medium chain fatty acids (C₈, C₁₀ and C₁₂ acids) esterified to glycerol (hereafter designated MCT = medium chain triglycerides) MCT fatty acids do not esterification to L-carnitine to ensure uptake into the mitochondrial matrix.

Custom designed oils with combinations of C₈, C₁₀ and C₁₂ acids together with oleinic acid have been used as a lipid supplementation to patients suffering from malabsorption or as parenteral alimentation, and there is ample proof of the beneficial effects of MCT in healthy volunteers and surgical patients.

Of results obtained, relevant to the active athlete, should be mentioned that the MCT fatty acids are not incorporated into adipose tissue, but are directly utilized for energy production by the skeletal muscle. Furthermore, MCT fatty acids will reduce the release of amino acids (glutamine and alanine) from muscle tissue and thereby impede protein degradation in the myocyte. MCT is transported in the portal vein blood and is therefore brought/delivered quickly to the working muscle, provided that the FFA extraction rate of the liver is low. The MCT acids decrease the glucose expenditure in slow-twitch muscle fibres, and hamper the oxidation of glucose within the myocyte. MCT taken together with a meal does not bring about a significant alteration of blood levels of insulin, C-peptide or glucagon. MCT will, subsequent to prolonged ingestion, reduce body weight and fat depots in rats, and as well as serum- and liver levels of cholesterol. Furthermore, it has been shown that MCT contributes to increased stamina of the heart muscle when oxygen supplies are scarce, and that blood pressure is moderately reduced. A modest stimulation of the immune system has also been observed.

It is therefore reasonable to believe that an MCT supplement would contribute to a reduction of glycogenolytic activity and glucose expenditure in the muscle to such an extent that muscular work, which otherwise would have been partly anaerobic, thereby increasing the production of lactic acid with ensuing muscle fibre damage, is tilted in the direction of being aerobic. Hence, an MCT supplement would secure high enough levels of acetyl-CoA from the β-oxidation of FFA to spare the muscular glucose pool. Consequently, the muscle might be rendered aerobic for a prolonged period, thereby preserving the glycogen stores for intermittently enhanced efficiency demands and spurts, to give the athlete an advantage when competing. Furthermore, it is reasonable to expect that MCT supplementation will reduce the lactate accumulation in muscle to the extent that the phase of restitution following exercise periods may be shortened, thus delaying the onset of exhaustion leading to overtraining. As an extra guarantee against overtraining, one may add a small amount of amino acids, preferably amino acids with branched side chain. These would secure a sufficient supply of amino acids along with the glycerol released upon MCT hydrolysis (to liberate FFA) to support the hepatic gluconeogenesis necessary to preserve a high blood glucose level. Finally, the branched side chain amino acids would also inhibit the uptake of tryptophan into the CNS, with an ensuing blockage of substrate for 5-HT synthesis, thus preventing the onset of central nervous fatigue and somnolence.

In various muscle model systems, it has been shown that the uptake of fatty acids corresponds to an expenditure of FFA approximating 12 g/hour per 75 kg body mass, provided a rise in the blood FFA levels to 2-3 mmol/l. Adding a supplement of 4 g of MCT every 20 minute equals a theoretical concentration of 2-3 mmol/l of C ₈ and C₁₀ fatty acids alone. The half life of MCT-fatty acid clearance from the circulation of a person at rest is 17 minutes. This indicates that close to all the ingested MCT (4 g) would be metabolized in 17 x 5 = 85 minutes. In the exercising muscle, the metabolic rate may be enhanced up to ten fold, hence 4 g of MCT would normally be taken up and metabolized in far less that 20 minutes. Then, an athlete would utilize all the MCT-fatty acids ingested, provided that the ensuing insulin increase due to concomitant intake of glucose and glucose polymers is not inhibiting the lipoprotein lipase situated in capillary walls within the muscle tissue.

However, it is known that a high level of FFA may lead to ketogenesis in the liver with ensuing acidification of the blood. Concomitant ingestion of glucose has, however, convincingly reduced or fully obliterated the production of ketone bodies in the liver. With the conjunctive intake of fructose, which mainly contributes to the synthesis of citrate and malonyl-CoA in the liver, it is reasonable to anticipate that the hepatic β-oxidation of MCT-fatty acid reaching the hepatocyte will be dramatically reduced, due to the inhibition of hepatic carnithine acyl transferase I (CAT-I) by malonyl-CoA. As a consequence, the ketogenesis would be almost eliminated.

### 6. Test procedure

Eight healthy male volunteers aged 24 to 45 years cycled on an ergometer cycle for 160 consecutive minutes using a pulse metre. The pulse rate was kept at a constant level equalling 80% of maximal attainable pulse rate for each individual. warm up was conducted for 10 minutes with a maximally permitted pulse rate of 120 beats/min, and venous blood was drawn using the Venoject system. Immediately thereafter, 330 ml energy drink were ingested. Every 20 minutes, the procedure was repeated by the test person without him stopping the pedalling during blood sampling and fluid replenishment. The blood sample (plasma) was analysed at the Institute of Medical Biochemistry, University of Oslo, Norway, for glucose, lactate and ß-hydroxy butyric acid, using standard kits obtained from Sigma Chemical Company (USA). Standard clinical chemistry parameters and insulin and glucagon were analysed by Furst's Medical Laboratory (Oslo, Norway) and the Hormone Laboratory, Aker Hospital (Oslo, Norway). Finally, free fatty acids (FFA) were analysed using standard HPLC technique at the Institute for Chemistry, University of Bergen, Norway.

The investigation period was divided into two time units, i.e. the first ordinary cycling exercise was conducted using energy drink without the MCT supplement. After some 14 days, identical experiments were performed, however, this time, the energy drink was fortified with MCT-oils and L-carnitine after 80 minutes of cycling. The objective was to assess how an MCT supplement of 12 grams of Oleum Neutrale = Triglycerida saturata media (obtained from Norsk Medicinal Depot, Oslo, Norway) containing medium chain fatty acids (C₈ and C₁₀) might affect blood glucose and lactate levels after a period of strenuous physical exercise bordering on the anaerobic threshold.

### 7. Results

### Example 1

Energy drink for common use:

| Substance: | g/l ready to drink |
|---|---|
| Glucose | 10 |
| Fructose | 10 |
| Dextrin 10 | 15 |
| Dextrin 20 | 15 |
| Pectin (E440) | 0.5 |
| | |
| NaCl | 0.5 |
| KH₂PO₄ | 0.5 |
| K₂HPO₄ | 0.5 |
| | |
| Valine | 1 |
| Leucine | 1 |
| | |
| L-carnitine | 1 |
| Oleum Neutrale | 12 |
| | |
| Na-carboxy-methyl | |
| cellulose (E466) | 2 |

Blood glucose levels remained approximately constant from the 80th to the 160th minute subsequent to intake of the energy drink supplemented with MCT-oil, and at the end of 160 minutes of bicycling, the net gain in blood glucose was some 1.5 mmol/l (see result-figures 1 and 3).

Lactate accumulation in the blood was dramatically reduced due to intake of energy drink with MCT-oil, and maximal net reduction accomplished at the end of 160 minutes of bicycling was some 15 mmol/l (see result-figures 2 and 3). This indicates that the lactate production in the muscle tissue is hampered, i.e. the expenditure of muscle glycogen is diminished.

The intake of fluid and salt ions is directed towards maintaining blood volume and replenish electrolytes. Analyses of , Na, K, Cl and Ca (of which the latter is parallelled by Mg) before and after each 80 minutes interval, undisputably showed that the concentrations of each electrolyte did not change during exercise maintained at 80% of maximal aerobic capacity (see result-tables 1 and 2). Furthermore, the MCT-oil supplement did not at all alter blood electrolytes.

The evaluation of short term effects of the energy drink with and without the addition of MCT-oil comprised analyses of haemoglobin (Hb), erythrocyte sedimentation rate (SR), liver function tests (blood ALAT, ASAT and albumin), kidney function tests (blood urea, creatinine, albumin), cholesterol metabolism (total- and HDL-cholesterol), as well as an assessment of myocyte destruction (blood creatine kinase = CK activity). Irrespective of supplementation of the energy drink with MCT-oil or placebo, all but one tolerance parameters mentioned were maintained within normal ranges and essentially unaltered. (see result-tables 1 and 2). Plasma CK, however, increased somewhat during the exercise period, but did not exceed levels normally encountered after periods with strenuous muscular endurance activity.

Increased amounts of amino acids in the blood stream after hard endurance exercise is a clear indication of degraded muscle protein, which is unfavourable during a phase when the athlete is building power and form. However, increased intake of amino acids will, when the amino acids are not utilized for the purpose of de novo protein synthesis, enhance the biochemical load on the liver by forcing it to increase its synthesis of urea. Monitoring of urea after each 80 minute period demonstrated that each test individual did not produce or retain more urea subsequent to the intake of energy drink with supplementation of amino acids, as compared with zero time analyses (see result-tables 1 and 2).

If the levels of insulin enhance rapidly as a result of enhanced intake of sugars, amino acids or fat (like after a well balanced meal), gluconeogenesis is impeded, and the mobilization of fat from adipose tissue and the hydrolysis of triglycerides in lipoprotein particles are hampered. Hence, we investigated whether or not plasma insulin and glucagon levels were significantly altered every 20 minutes during the total period of bicycling (160 minutes). Result-figures 4 and 5 demonstrate that supplementation of MCT-cil does not affect the hormone levels in the circulation, and that the insulin level does not increase by more than 20% during the first 60-80 minutes after intake of energy drink with MCT-oil. This indicates that the hepatic gluconeogenesis with amino acids, lactate and glycerol as substrates is intact and well functioning. At the same time, the lipoprotein lipase in the capillaries perfusing the muscles, is also functioning properly, ensuring that the MCT-oil is hydrolysed into free fatty acids, which can be utilized directly in the myocytes to produce energy for the muscle contraction.

By adding L-carnitine. The mitochondrial uptake of endogenous long chain fatty acids will be facilitated via the shuttle mechanism, without hampering the uptake of the MCT acids. Maximal β-oxidation of the FFA is therefore ensured, which yields a maximally attainable level of acetyl-CoA, which via NADH-synthesis in the Krebs cycle will replenish ATP levels through oxidative phosphorylation. Concomitantly, the key enzymes of the glycolytic pathway will be maximally inhibited in an allosteric fashion by negative feedback from NADH, ATP, acetyl-CoA, citrate, and AMP. In this manner, the muscle will save glycogen until needed for sudden and intermittent increases in energy demands (above the aerobic level), thereby preventing the acidification of the internal myocyte environment by lactic acid production. Consequently, one might postulate that the development of muscle stiffness is delayed, and the phase of muscle restitution between exercise periods and/or competitions may be shortened.

Intake or mobilisation of triglycerides may result in higher levels of FFA in the blood, which may initiate ketogenesis in the liver, thereby reducing blood pH analogous to the accumulation of lactic acid in the muscle tissue. Consequently, the levels of β-hydroxy butyric acid in the circulation were investigated (see result-figure 6). The analyses demonstrate that ingestion of energy drink with MCT-oil during bicycling, in fact, reduces blood levels of ketone bodies to approximately zero value.

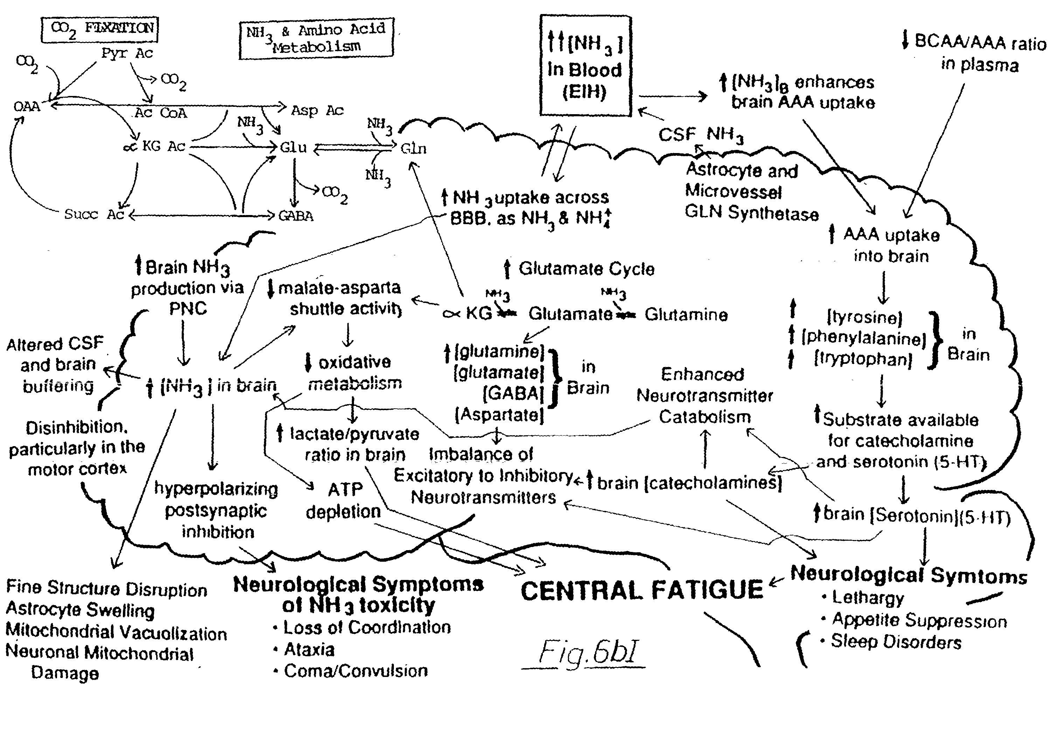

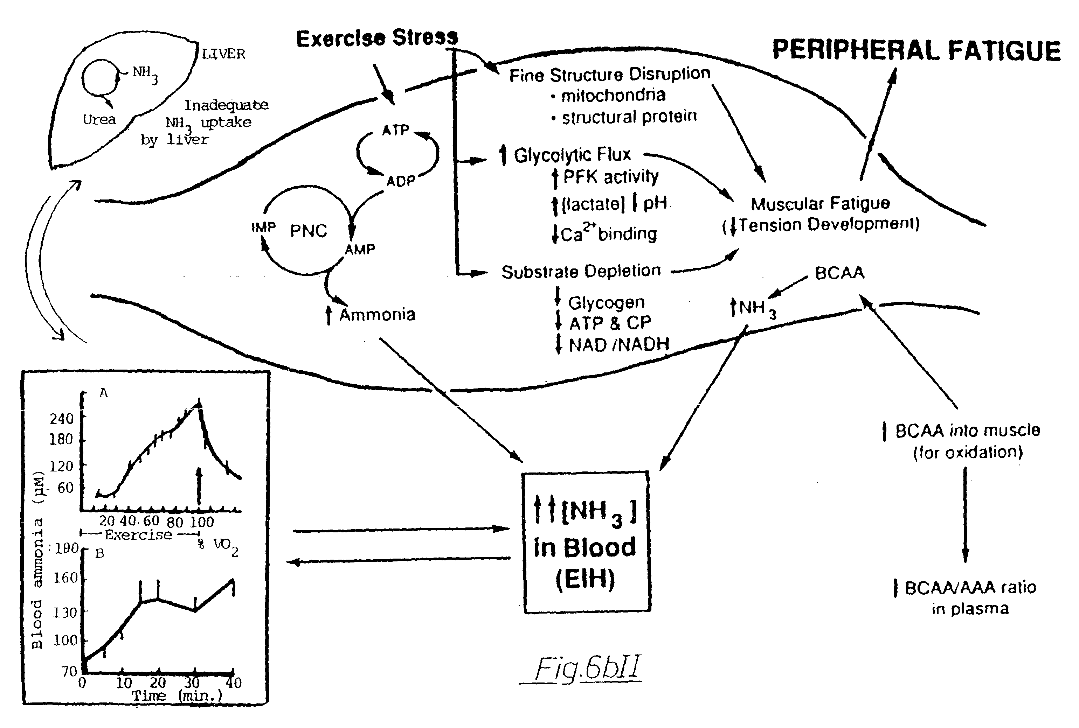

The two fatty acids in Oleum Neutrale exhibit intermediary chain length, and it is asserted that such fatty acids are not stored by the adipose tissue, but mainly catabolized by the muscle tissue. The levels of triglycerides and saturated C₈ and C₁₀ fatty acids during bicycling after ingestion of energy drink supplemented with MCT-oil were estimated (see result-figure 7). The analyses clearly showed that the plasma levels of triglycerides were not significantly altered, while the concentration of both intermediary chain length fatty acids were reduced to trace amounts (less that 0.1%) within 20 minutes subsequent to intake of fluid. Since the energy drink with MCT supplement renders the body favourable in terms of glucagon/insulin ratio, it is concluded that the saturated C₈ and C₁₀ acids are combusted by the muscle tissue during this 20 minute period.

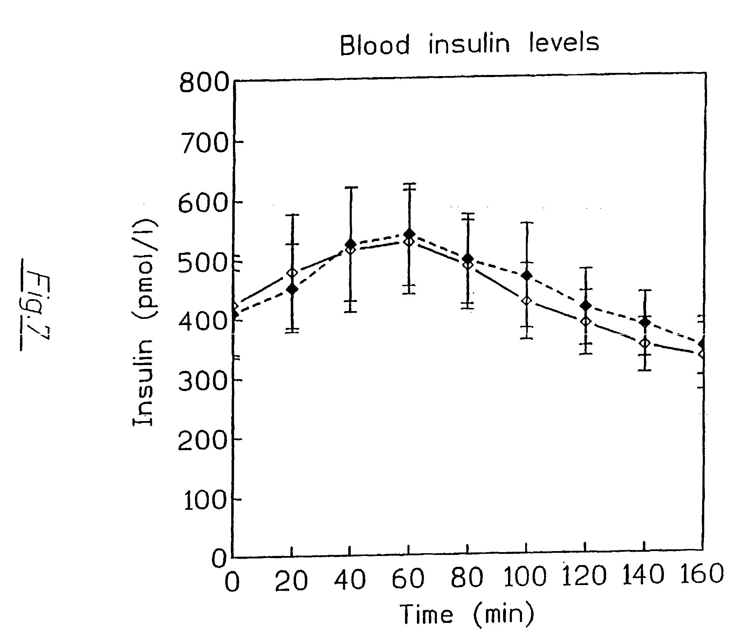

L-carnitine esterified to long chain fatty acids facilitates the fatty acid transport into the mitochondria where β-oxidation takes place. The effect of L-carnitine fortification was analysed as a reduction of FFA in plasma (i.e. the reduction in the amount of C₁₄, C₁₆, C₁₈ and C₂₀ fatty acids with ≤2 double bonds) Result-figure 8 clearly shows that the addition of MCT-oil and L-carnithine at the 80th minute reduce the plasma levels of FFA by some 20% starting at the 100th minute of the bicycle exercise.

### Examples 2-16

Energy drink, as in example 1, where either glucose, fructose, the dextrins, the amino acids or the L-carnitine, either separately or in 2 by 2 combinations, are reduced by 50%, but. still contains 12 g/litre of Oleum Neutrale. Other components (i.e. salts/electrolytes and additives) are unchanged.

The investigation was repeated, as described in example 1, with the same healthy male volunteers bicycling for 160 minutes, using the same work load, fluid ingestion, and venous blood sample delivery every 20 minutes. Blood samples were only analysed for glucose and lactate.

The benefits in blood glucose stabilization and circulating lactate suppression were diminished by some 15-40% and 15-35%, respectively. The lowest effect reduction was obtained after removing half the level of amino acids, the highest effect reduction by removing half the amount of maltodextrin 10 (results not shown).

### Example 17

Energy drink where the MCT-oil was reduced to 8 g/litre. Otherwise, the ingredients were as in example 1.

The investigation was repeated, as described in example 1, with the same healthy male volunteers bicycling for 160 minutes, using the same work load, fluid ingestion, and venous blood sample delivery every 20 minutes. Blood samples were only analysed for glucose and lactate.

The benefits in blood glucose stabilization and circulating lactate suppression were diminished by some 50% and 45%, respectively (results not shown)

### Example 18

Energy drink where the MCT-oil was enhanced to 15 g/litre. Otherwise, the ingredients were as in example 1.

The investigation was repeated, as described in example 1, with the same healthy male volunteers bicycling for 160 minutes, using the same work load, fluid ingestion, and venous blood sample delivery every 20 minutes. Blood samples were only analysed for glucose and lactate.

The benefits in blood glucose stabilization and circulating lactate suppression were not increased by more than approximately 10% (results not shown).

### Legends to result-tables and result-figures (example 1)

### Result - table 1.

Clinical chemical variables analysed in blood immediately before, 80 minutes after and 160 minutes after ingestion of 330 ml energy drink every 20 minutes. Energy drink consumed after the 80th minute was supplemented with 12 g/litre of MCT-oil (Oleum Neutrale). The figures obtained for each parameter are given as means ± 1xSD for the study population (n = 8).

### Result - table 2.

Clinical chemical variables analysed in blood immediately before, 80 minutes after and 160 minutes after ingestion of 330 ml energy drink every 20 minutes. No MCT-oil (Oleum Neutrale) was added during the entire study period. The figures obtained for each parameter are given as means ± 1xSD for the study population (n = 8).

### Result - figure 7.

Blood glucose levels during 160 minutes of bicycling. The broken line represents ingestion of fluid without addition of MCT-oil. The unbroken line represents a parallel trial with energy drink fortified with 12 g/litre of MCT-oil subsequent to the 80th minute. The figures obtained are given as means ± 1xSD for the study population (n = 8).

### Result - figure 8.

Blood lactate levels during 160 minutes of bicycling. The broken line represents ingestion of fluid without addition of MCT-oil. The unbroken line represents a parallel trial with energy drink fortified with 12 g/litre of MCT-oil subsequent to the 80th minute. The figures obtained are given as means ± 1xSD for the study population (n = 8).

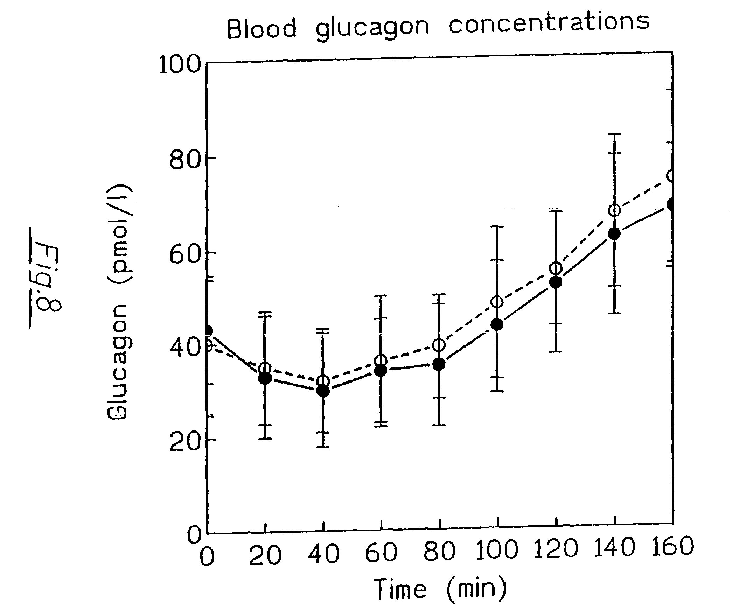

### Result - figure 9.

Differences in blood glucose and lactate levels as a function of supplementation of the energy drink with 12 g/litre MCT-oil (as depicted in result-figures 1 and 2) after 80 minutes of bicycling. The unbroken line illustrates the blood glucose difference, while the broken line depicts the lactate difference.

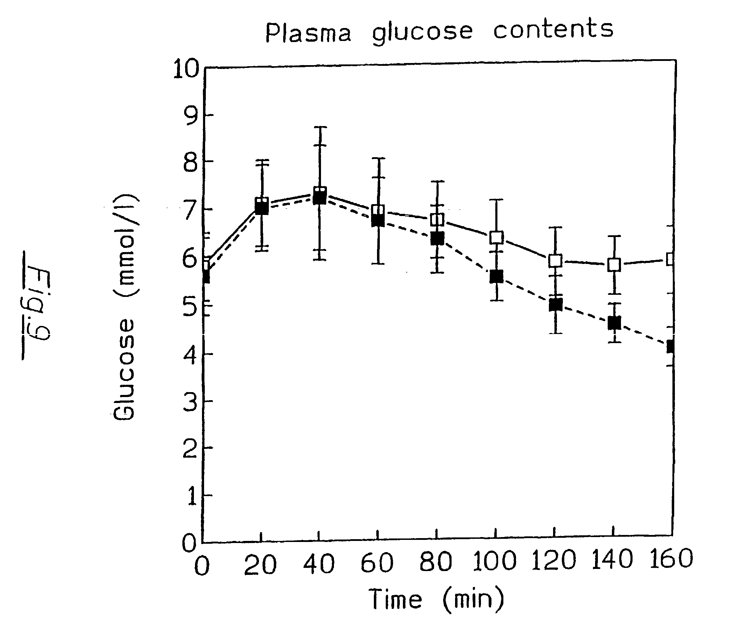

### Result - figure 10.

Blood insulin levels during 160 minutes of bicycling, where the unbroken line represents intake of energy drink without the addition of MCT-oil. The broken line depicts a parallel trial with MCT-oil supplementation of 12 g/litre after the 80th minute. The figures obtained are given as means ± 1xSD for the study population (n = 8).

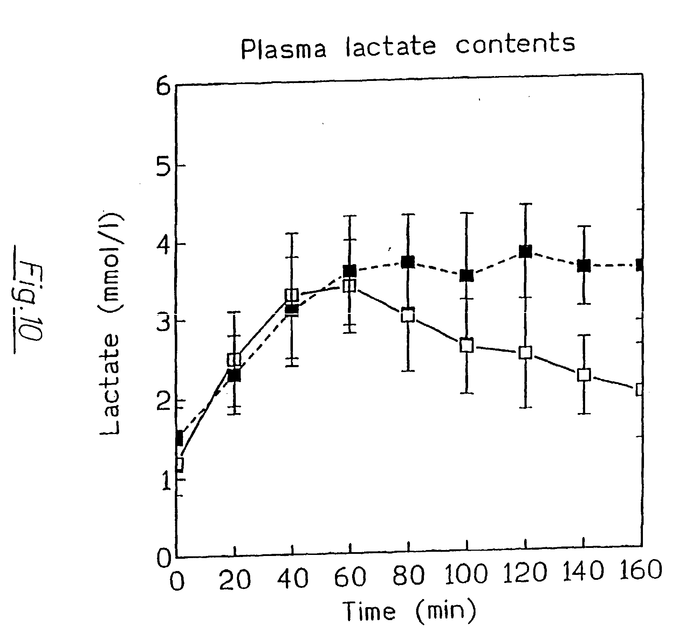

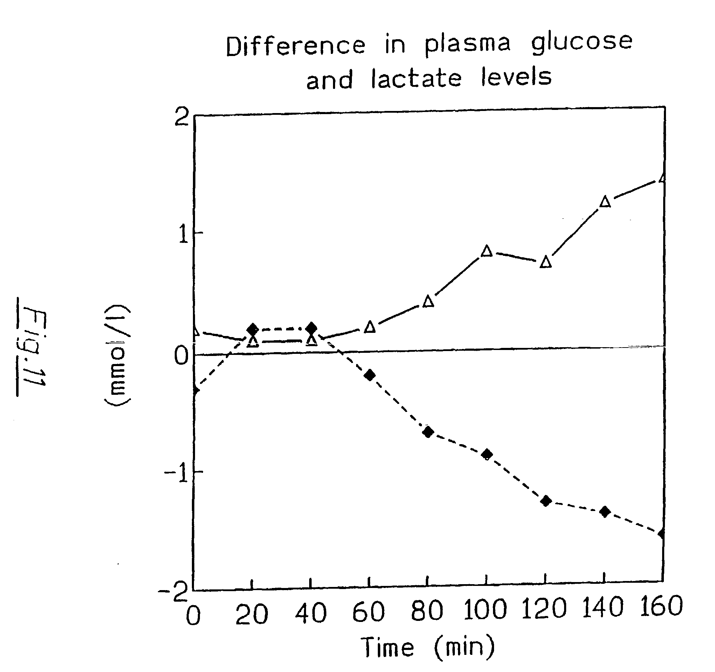

### Result - figure 11.

Blood glucagon levels during 160 minutes of bicycling where the unbroken line represents intake of energy drink without the addition of MCT-oil. The broken line depicts a parallel trial with MCT-oil supplementation of 12 g/litre after the 80th minute. The figures obtained are given as means ± 1xSD for the study population (n = 8).

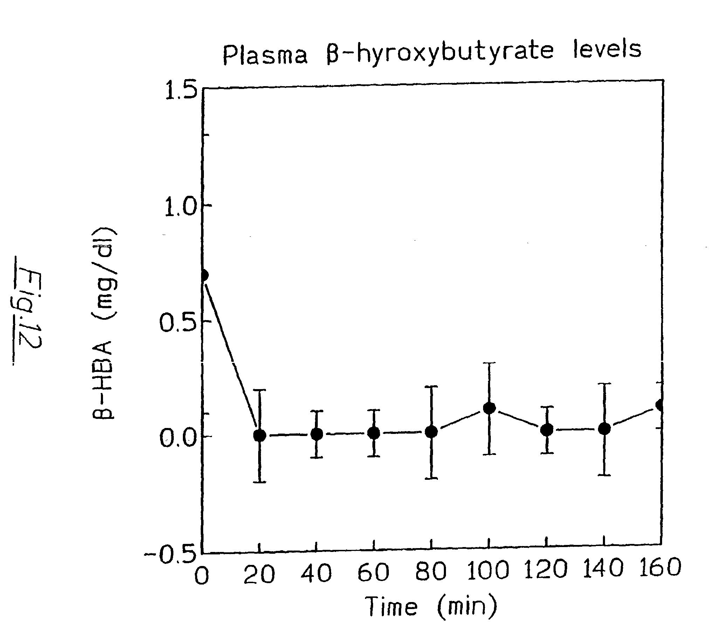

### Result - figure 12.

Blood ß-hydroxy butyric acid levels during 160 minutes of bicycling where the unbroken line represents intake of energy drink with the addition of 12 g/litre MCT-oil after the 80th minute. The figures obtained are given as means ± 1xSD for the study population in = 8).

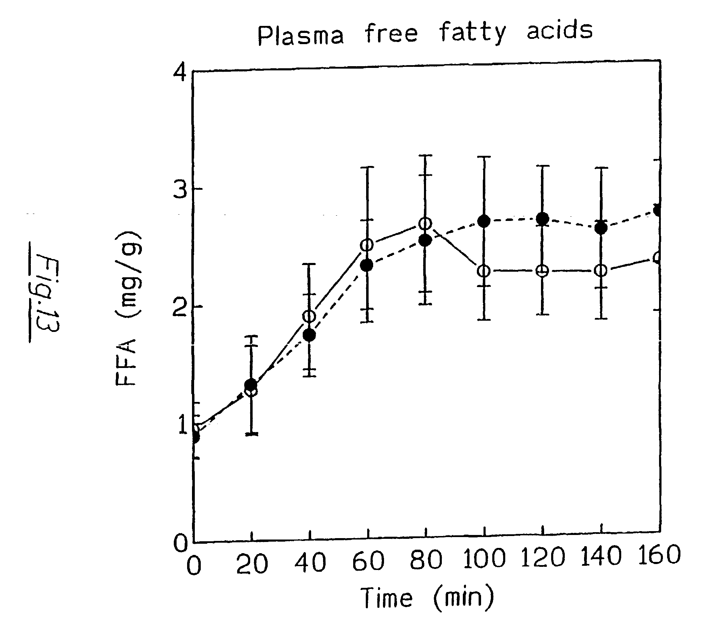

### Result - figure 13.

Blood triglyceride levels during 160 minutes of bicycling where the broken line represents intake of energy drink without the addition of MCT-oil and L-carnitine. The unbroken line depicts a parallel trial with MCT-oil supplementation of 12 g/litre and an addition of L-carnitine of 1 g/litre after the 80th minute. The figures obtained are given as means ± 1xSD for the study population (n = 8).

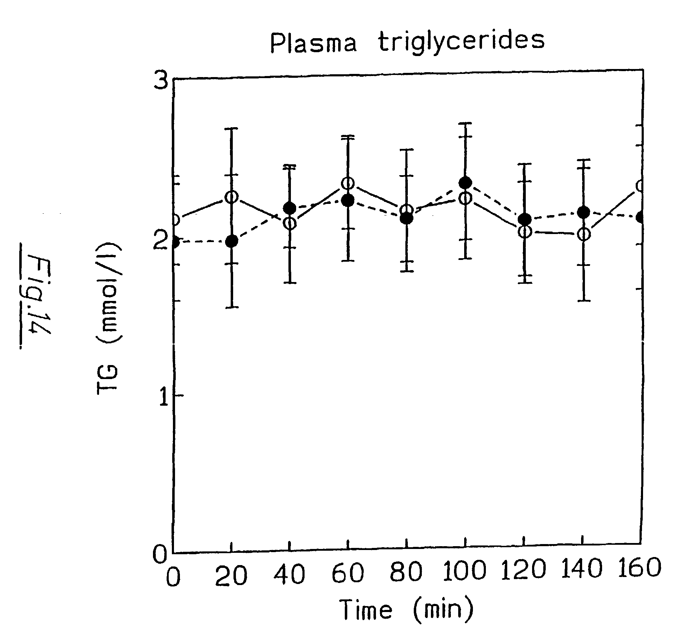

### Result - figure 14.

Blood free fatty acid levels (estimated as the sum of C₁₄, C₁₆, C₁₈ and C₂₀ fatty acids with ≤2 double bonds) during 160 minutes of bicycling where the broken line represents intake of energy drink without the addition of MCT-oil and L-carnitine. The unbroken line depicts a parallel trial with MCT-cil supplementation of 12 g/litre and an addition of L-carnitine of 1 g/litre after the 80th minute. The figures obtained are given as means ± 1xSD for the study population (n = 8).

**Table 1.**

| Clinical chemistry during exercise with the addition of lipid | | | |
|---|---|---|---|
| Blood variable | Time = 0 min | Time = 80 min | Time = 160 min |
| Hb | 14,5 ± 1,2 | 14.7 ± 1,3 | 14,5 ± 1,5 |
| SR | 10 ± 4 | 9 ± 5 | 9 ± 4 |
| Na | 143 ± 4 | 147 ± 6 | 146 ± 4 |
| K | 4,4 ± 0,6 | 4,2 ± 0,5 | 4,4 ± 0,5 |
| Cl | 105 ± 5 | 105 ± 6 | 102 ± 4 |
| Ca | 2,4 ± 0,2 | 2,3 ± 0,2 | 2,4 ± 0,1 |
| ALAT | 36 ± 4 | 40 ± 6 | 38 ± 5 |
| ASAT | 33 ± 4 | 37 ± 4 | 37 ± 6 |
| Albumin | 48 ± 5 | 46 ± 6 | 45 ± 4 |
| Urea | 5,4 ± 1.5 | 5,3 ± 1,3 | 5,8 ± 2,0 |
| Creatinine | 92 ± 10 | 102 ± 18 | 98 ± 15 |
| HDL-chol | 1,4 ± 0,2 | 1,4 ± 0,3 | 1,3 ± 0,3 |
| Total chol | 4,8 ± 0,7 | 5,0 ± 0,7 | 4,8 ± 0,6 |
| CK | 188 ± 45 | 267 ± 68 | 288 ± 85 |

**Table 2.**

| Clinical chemistry during exercise without the addition of lipid | | | |
|---|---|---|---|
| Blood variable | Time = 0 min | Time = 80 min | Time = 160 min |
| Hb | 14,1 ± 1,4 | 14,8 ± 1,2 | 14,5 ± 1,3 |
| SR | 11 ± 3 | 10 ± 4 | 9 ± 5 |
| Na | 146 ± 7 | 148 ± 10 | 148 ± 12 |
| K | 4,5 ± 0,6 | 4,3 ± 0,6 | 4,5 ± 0,6 |
| Cl | 102 ± 6 | 108 ± 8 | 110 ± 8 |
| Ca | 2,3 ± 0,2 | 2,3 ± 0,2 | 2,4 ± 0,2 |
| ALAT | 38 ± 3 | 40 ±7 | 39 ± 6 |
| ASAT | 36 ± 5 | 36 ± 4 | 33 ± 4 |
| Albumin | 42 ± 4 | 44 ± 5 | 44 ± 5 |
| Urea | 5,7 ± 1,5 | 5,4 ± 1,2 | 5,6 ± 1,5 |
| Creatinine | 88 ± 15 | 94 ± 20 | 92 ± 13 |
| HDL-chol | 1,3 ± 0,3 | 1,4 ± 0,2 | 1,3 ± 0,2 |
| Total chol | 4,7 ± 0,6 | 4,9 ± 0,6 | 4,7 ± 0,8 |
| CK | 147 ± 61 | 288 ± 78 | 317 ± 67 |

### References concerning the biochemical/physiological background and documentation of MCT in a medical context

### Biochemistry/Physiology

### Books:

Scientific basis for athletic conditioning (eds. Fisher and Jensen), Lea & Febiger, Philadelphia, 1990 Endurance in sport (eds. Shophar and Åstrand), Blackwell Scientific Publications, Oxford, 1992

### Tidsskriftet for den Norske Lægeforenting:

6,1993;113:719-22, Bahr et al., Overtrening blant idretts- utøvere - årsaker, diagnostikk og behandling 7,1993;113:850-2, Halvorsen og Endsjø, Infeksjonssykdommer og fysisk aktivitet

### Review articles:

Bale, The functional performance of children in relation to growth, maturation and exercise, Sports Medicine, 13(3):-151- 59, 1992

Banister and Cameron, Exercise-induced hyperammonemia: peripheral and central effects, Int J Sports Med, 11:- 129-42, 1990

Cannon, Exercise and resistance to infection, J Am Physiol Soc, 74(3):973-81,1993

Deschenes et al., Exercise-induced hormonal changes and their effects upon skeletal muscle tissue, Sports Medicine, 12(2):80-93,1991

Elias and Wilson, Exercise and gonadal function, Human reproduction, 8(10):1747-61, 1993

Guezennec, Role of lipids on endurance capacity in man, Int J Sports Medicine, 13:114-8, 1992

Hood and Terjung, Amino acid metabolism during exercise and following endurance training, Sports Medicine, 9(1)-:23-35, 1990

Hultman and Greenhaff, Skeletal muscle energy metabolism and fatigue during intense exercise in man, Sci Progress Edinburgh, 75:361-70, 1991

Lehmann and Keul, Overtraining in endurance athletes: a brief review, Med Sci Sports Exercise, 25(7):854-62, 1993

Pedersen, Influence of physical activity on the cellular immune system: mechanism of action, Int J Sports Med, 12:23-9,1991

Saltin and Åstrand, Free fatty acids and exercise, Am J Clin Nutr, 57(suppl.):752-8, 1993

Stanley and Connett, Regulation of muscle carbohydrate metabolism during exercise, The FASEB Journal, 5:2156-60, 1991

### Documentation of MCT

Kolb & Sailer, 1984. JPEN J Parenter Enteral Nutr, 8:285-289

Kelly et al., 1993. J Clin Invest, 92:91-98

Vukovich et al., 1993. J Appl Physiol, 75:1513-1518

Nolte et al., 1994. Acta Physiol Scand, 151:51-59

Turcotte et al., 1992. Am J Physiol, 262:E791-799

Graham et al., 1991. Am J Physiol, 261:E168-176

Senaris et al., 1592. Neurosci Lett, 135:80-82

Miles et al., 1991. JPEN J Parenter Enteral Nutr, 15:37-41

Hwang et al., 1992. J Nutr Sci Vitaminol, 38:127-139

Van Kempen & Odle, 1993. J Nutr, 123:1531-1537

Miura et al., 1993. Immunology, 78:142-146

Stouthard et al., 1994. JPEN J Parenter Enteral Nutr, 18:436-431

Brousolle et al., 1992. Metabolism, 41:1276-1283

Sato et al., 1992. JPEN J Parenter Enteral Nutr, 16:451-454

Eckel et al., 1992. Diabetes, 41:641-647

Rossle et al., 1991. Infusionstherapie, 18:167-171

Metges & Wolfram, 1991. J Nutr, 121:31-36

Gogos et al., 1990. Am J Clin Nutr, 51:119-122

Rossle et al., 1990. Am J Physiol, 258:E944-947

Kaunitz, 1986. J Environ Pathol Toxicol Oncol, 6:115-121

Beaufrere, 1985. Am J Physiol, 149:E175-182

Garfinkel et al., 1992. J Surg Res, 52:328-333

De Gaetano et al., 1994. JPEN J Parenter Enteral Nutr, 18:134-140

Ball, 1991. Am J Clin Nutr, 53:916-922

Mascioli et al., JPEN J Parenter Enteral Nutr, 15:27-31

Puchstein et al., 1990. Anasth Intensivther Notf Med, 25:87-92

Wolfram et al., 1989. Z Ernahrungswiss, 28:173-180

Satabin et al., 1989. Eur J Appl Physiol, 58:583-590

MacIver et al., 1990. J Hum Hypertonias, 4:485-490

Guezennec, 1992. Int J Sports Med, 13:Suppl 1;S114-118

Hagermann, 1992. Med Sci Sports Exerc, 24:Suppl;S309-314

Coyle, 1992. J Nutr, 122:Suppl;788-795

Stanley & Connett, 1991. FASEB J, 5:21,55-2159

Coyle, 1991. J Sports Sci, 9;Spec No;29-52

## Claims

1. A composition suitable for rapid and prolonged muscular and cerebral energy metabolism comprising physiologically absorbable electrolytes, carbohydrates, amino acids with branched side chains and lipids, wherein the lipids comprise L-carnitine and glycerol esterified with a medium chain saturated fatty acid selected from caprylic (C₈) acid and/or capric (C₁₀) acid and/or a C₁₂ fatty acid, and/or a long chain mono- or polyunsaturated fatty acid, and wherein the carbohydrate comprises at least three sugars selected from glucose, fructose and maltodextrins.

2. A composition as claimed in claim 1, wherein the maltodextrins are maltodextrin types 10 and 20.

3. A composition as claimed in claim 2, wherein the glucose, fructose and maltodextrins are present in the ratio of 1:1:1.5:1.5.

4. A composition as claimed in claim 2, wherein the carbohydrates are sucrose and the maltodextrins are types 10 and 20 in the ratio of 2:1.5:1.5.

5. A composition as claimed in any one of the preceding claims, wherein the composition also comprises preservation additives, juice concentrates and/or artificial flavours.

6. An energy supplement comprising a composition as claimed in any one of the preceding claims.

## Patentansprüche

1. Zusammensetzung, geeignet für schnellen und längeren muskulären und cerebralen Energiemetabolismus, umfassend physiologisch absorbierbare Elektrolyten, Kohlenhydrate, Aminosäuren mit verzweigten Seitenketten und Lipide, wobei die Lipide L-Carnitin und Glycerin, verestert mit einer mittelkettigen gesättigten Fettsäure, ausgewählt aus Caprylsäure (C₈) und/oder Caprinsäure (C₁₀) und/oder einer C₁₂-Fettsäure und/oder einer langkettigen mono- oder polyungesättigten Fettsäure, umfassen, und wobei das Kohlenhydrat mindestens drei Zucker, ausgewählt aus Glucose, Fructose und Maltodextrinen, umfasst.

2. Zusammensetzung nach Anspruch 1, wobei die Maltodextrine Maltodextrintypen 10 und 20 sind.

3. Zusammensetzung nach Anspruch 2, wobei die Glucose, Fructose und Maltodextrine im Verhältnis 1:1:1,5:1,5 vorliegen.

4. Zusammensetzung nach Anspruch 2, wobei die Kohlenhydrate Saccharose sind und die Maltodextrine Typen 10 und 20 sind im Verhältnis 2:1,5:1,5.

5. Zusammensetzung nach einem der vorangehenden Ansprüche, wobei die Zusammensetzung auch Konservierungszusätze, Saftkonzentrate und/oder künstliche Aromen umfasst.

6. Energieergänzung, umfassend eine Zusammensetzung nach einem der vorangehenden Ansprüche.

## Revendications

1. Composition appropriée à un métabolisme énergétique musculaire et cérébral, rapide et prolongé, comprenant des électrolytes physiologiquement absorbables, des hydrates de carbone, des acides aminés à chaînes latérales ramifiées et des lipides, dans laquelle les lipides comprennent la L-carnithine et le glycérol estérifié par un acide gras saturé à chaîne moyenne choisi parmi l'acide caprylique (C₈) et/ou l'acide caprique (C₁₀) et/ou un acide gras en C₁₂, et/ou un acide gras mono- ou polyinsaturé à longue chaîne et dans laquelle l'hydrate de carbone comprend au moins trois sucres choisis parmi le glucose, le fructose et les maltodextrines.

2. Composition selon la revendication 1, dans laquelle les maltodextrines sont des types 10 et 20.

3. Composition selon la revendication 2, dans laquelle le glucose, le fructose et les maltodextrines sont présents dans des rapports 1 :1 :1,5 :1,5.

4. Composition selon la revendication 2, dans laquelle les hydrates de carbone sont le sucrose et les maltodextrines des types 10 et 20 dans les rapports 2 :1,5 :1,5.

5. Composition selon l'une quelconque des revendications précédentes, laquelle comprend en outre des additifs de conservation, des concentrés de jus et/ou des arômes artificiels.

6. Complément énergétique comprenant une composition selon l'une quelconque des revendications précédentes.
